# EUROPÄISCHE PATENTSCHRIFT

(11) **EP 3 785 310 B1**
(45) Veröffentlichungstag und Bekanntmachung des Hinweises auf die Patenterteilung: **03.09.2025**
(21) Anmeldenummer: 19719269.3
(22) Anmeldetag: 23.04.2019
(51) Int. Cl.: H01M 10/39, H01M 10/613, H01M 10/6561, H01M 50/204

(54) **ELEKTROCHEMISCHER ENERGIESPEICHER**
ELECTROCHEMICAL ENERGY STORE
ACCUMULATEUR D'ÉNERGIE ÉLECTROCHIMIQUE

(30) Priorität: 27.04.2018 EP 18169811
(43) Veröffentlichungstag der Anmeldung: 03.03.2021
(73) Patentinhaber: BASF SE, 67056 Ludwigshafen am Rhein (DE)
(72) Erfinder: HEIDEBRECHT, Peter, 67056 Ludwigshafen (DE); JABCZYNSKI, Wolfgang, 67056 Ludwigshafen (DE); STEIGNER, Peter, 67056 Ludwigshafen (DE); MERKEL, Dirk, 67056 Ludwigshafen (DE); BAYER, Domnik, 67056 Ludwigshafen (DE); ZERPA UNDA, Jesus Enrique, 67056 Ludwigshafen (DE)
(74) Vertreter: BASF IP Association
(86) Internationale Anmeldenummer: PCT/EP2019/060294
(87) Internationale Veröffentlichungsnummer: WO 2019/206864

(56) Entgegenhaltungen:
- DE-A1- 3 247 969
- DE-A1- 3 247 969
- GB-A- 1 386 525
- GB-A- 1 386 525
- GB-A- 197 183
- GB-A- 197 183

## Beschreibung

Die Erfindung geht aus von einem elektrochemischen Energiespeicher mit mindestens einer elektrochemischen Zelle.

Elektrochemische Energiespeicher werden im Allgemeinen auch als Batterie oder Akkumulator bezeichnet. Insbesondere wiederaufladbare Batterien beziehungsweise Akkumulatoren werden eingesetzt, um elektrische Energie speichern und nutzen zu können. Zur Speicherung von großen Mengen elektrischer Energie sind entsprechend leistungsfähige wiederaufladbare Batterien erforderlich. Hierzu ist es zum Beispiel möglich, Batterien auf Basis von geschmolzenem Natrium und Schwefel einzusetzen. Um die entsprechende Kapazität zu erzielen, werden hierbei in den elektrochemischen Energiespeichern üblicherweise mehrere elektrochemische Zellen eingesetzt, die miteinander elektrisch verbunden sind. Solche elektrochemischen Zellen, die auf Basis eines geschmolzenen Alkalimetalls als Anode und einem kathodischen Reaktionsteilnehmer, im Allgemeinen Schwefel, arbeiten, sind zum Beispiel in WO-A 2017/102697 beschrieben. Hierbei werden das geschmolzene Alkalimetall und der kathodische Reaktionsteilnehmer durch einen für Kationen durchlässigen Festelektrolyten getrennt. An der Kathode erfolgt eine Reaktion des Alkalimetalls mit dem kathodischen Reaktionsteilnehmer. Dies ist zum Beispiel bei Einsatz von Natrium als Alkalimetall und Schwefel als kathodischem Reaktionsteilnehmer die Reaktion von Natrium und Schwefel zu Natriumpolysulfid. Zum Laden des elektrochemischen Energiespeichers wird das Natriumpolysulfid an der Elektrode durch Aufbringen elektrischer Energie wieder in Natrium und Schwefel getrennt.

Üblicherweise werden die einzelnen elektrochemischen Zellen in sogenannten Batteriepacks gestapelt oder alternativ parallel zueinander in ein Gehäuse gestellt. Diese Anordnung hat jedoch den Nachteil, dass eine gleichmäßige Temperierung der einzelnen Zellen nur schwierig möglich ist. Insbesondere ein Durchströmen mit einem Temperiermedium führt dazu, dass durch die Wärmeaufnahme des Temperiermediums von den einzelnen Zellen mit zunehmendem Strömungsweg des Temperiermediums eine Temperaturzunahme und damit eine schlechtere Kühlung der elektrochemischen Zellen erfolgt. Dies ist jedoch für den Betrieb des elektrochemischen Energiespeichers von Nachteil. Insbesondere besteht das Risiko, dass bei einer zu starken Temperaturerhöhung Schäden an den einzelnen elektrochemischen Zellen auftreten. Wenn diese zu einer Beschädigung des Festelektrolyten führen, kann dies eine unkontrollierte Reaktion zur Folge haben, die zu einem Brand des elektrochemischen Energiespeichers führen kann, der nur schwer zu beherrschen ist.

Entsprechende Energiespeicher mit Natrium-Schwefel-Batterien sind zum Beispiel in JP-A 2000-297989 oder US-B 7,955,725 beschrieben. Ein gekühltes Batteriemodul ist in DE 32 47 969 A1 offenbart. Die GB 197 183 A offenbart eine Batterie, die an einem Träger befestigte Batteriezellen in einem gekühlten Gehäuse umfasst.

Aufgabe der vorliegenden Erfindung ist es, einen elektrochemischen Energiespeicher mit elektrochemischen Zellen bereitzustellen, bei dem eine gleichmäßige Temperierung möglich ist.

Diese Aufgabe wird gelöst durch einen elektrochemischen Energiespeicher, umfassend mindestens eine elektrochemische Zelle sowie eine Tragstruktur, wobei die mindestens eine elektrochemische Zelle hängend in der Tragstruktur aufgenommen ist und die Tragstruktur mit der mindestens einen darin hängend aufgenommenen elektrochemischen Zelle von einem Gehäuse umschlossen ist, wobei das Gehäuse einen Zulauf und einen Ablauf (39) für ein Temperiermedium aufweist, die so angeordnet sind, dass das Temperiermedium von oben nach unten entlang der elektrochemischen Zellen strömt und der Zulauf für das Temperiermedium oberhalb der Haltevorrichtung angeordnet ist, wobei die Tragstruktur mindestens einen Rahmen mit einer Haltevorrichtung umfasst, in der die elektrochemischen Zellen aufgehängt sind und die Haltevorrichtung eine Platte ist, in der Ausnehmungen ausgebildet sind, in die die elektrochemischen Zellen gehängt sind, wobei die Ausnehmungen weiterhin so gestaltet sind, dass ein Temperiermedium durch die Ausnehmungen gleichmäßig in den Bereich strömt, in dem die elektrochemischen Zellen aufgehängt sind.

Anders als bei liegenden oder stehenden elektrochemischen Zellen ist es möglich, die hängenden elektrochemischen Zellen gleichmäßig mit einem Temperiermedium zu umströmen, so dass diese gleichmäßig temperiert werden. Insbesondere ist eine Strömung des Temperiermediums parallel zu den Zellen auf einfache Weise realisierbar, indem das Temperiermedium von oben nach unten strömt. Ein weiterer Vorteil ist, dass in einem möglichen Schadensfall einer einzelnen elektrochemischen Zelle die eingesetzten Edukte und das Reaktionsprodukt nach unten auf den Boden unterhalb der Zellen strömt, was insbesondere bei hochreaktiven Komponenten einen zusätzlichen Sicherheitsaspekt bieten kann, da die durch die Reaktion entstehende Wärme nicht unmittelbar an die benachbarten Zellen übertragen wird. Zudem kann das in einem solchen Schadensfall aus einer elektrochemischen Zelle ausgelaufene Material einfach beseitigt werden. Ein weiterer großer Vorteil ist, dass die eingesetzte Tragstruktur, insbesondere die tragenden Teile der Tragstruktur nicht mit den in den elektrochemischen Zellen eingesetzten Reaktanten in Kontakt kommen, sofern es zur Schädigung einzelner Zellen kommt und die eingesetzten Reaktanten auslaufen. Hierdurch wird zum einen die Sicherheit der Konstruktion erhöht, da diese im Falle der Beschädigung einzelner elektrochemischen Zellen nicht insgesamt geschädigt wird. Zum anderen ist es auch möglich, anstelle von Edelstahl, der gegen Korrosion durch die eingesetzten Reaktanten stabil ist, einfachere Konstruktionsmaterialien, insbesondere Schwarzstahl, für die Tragstruktur einzusetzen.

Um eine gleichzeitige Umströmung der elektrochemischen Zellen mit einem Temperiermedium zu ermöglichen, ist die Tragstruktur mit den darin hängend aufgenommenen elektrochemischen Zellen von einem Gehäuse umschlossen. Die Gehäusewandung könnte dabei aus jedem beliebigen Material gefertigt sein. Abhängig von der Größe der elektrochemischen Zellen und der Anzahl der elektrochemischen Zellen ist es zum Beispiel möglich, das Gehäuse aus einem Metall, insbesondere Stahl, herzustellen oder auch alternativ bei einem großen elektrochemischen Energiespeicher ein gemauertes Gebäude als Gehäuse vorzusehen. Um einen großen elektrochemischen Energiespeicher transportabel zu gestalten, ist es alternativ auch möglich, ein Gehäuse ähnlich einem Standardcontainer, beispielsweise einem 20-Fuß-Container oder 40-Fuß-Container einzusetzen. Diese lassen sich dann mit den üblichen Verkehrsmitteln, mit denen solche Standardcontainer transportiert werden, bewegen. Ein weiterer Vorteil der Verwendung solcher Standardcontainer ist, dass für die Bereitstellung einer größeren Speicherkapazität oder einer höheren zur Verfügung zu stellenden Leistung des elektrochemischen Energiespeichers mehrere solcher Container zu einem großen Energiespeicher verbunden werden können. Aufgrund der hohen Temperaturen, bei denen Alkalimetall-Schwefel-Zellen, insbesondere Natrium-Schwefel-Zellen betrieben werden, ist es weiterhin vorteilhaft, das Gehäuse thermisch zu isolieren. Die thermische Isolierung kann dabei sowohl auf der Innenseite des Gehäuses als auch auf der Außenseite des Gehäuses angebracht sein. Auch ist es möglich, eine Doppelwand für das Gehäuse vorzusehen und die Isolierung zwischen den Wänden anzubringen.

Um eine einfache Montage des elektrochemischen Energiespeichers zu ermöglichen, umfasst die Tragstruktur mindestens einen Rahmen mit einer Haltevorrichtung, in der die elektrochemischen Zellen aufgehängt sind. Die Verwendung eines Rahmens mit einer zusätzlichen Haltevorrichtung, in der die elektrochemischen Zellen aufgehängt sind, ermöglicht es, eine Vormontage außerhalb des Gehäuses durchzuführen. In diesem Fall werden zunächst die elektrochemischen Zellen in die Haltevorrichtung eingebracht und diese mit dem Rahmen verbunden. Alternativ ist es auch möglich, zuerst die Haltevorrichtung in den Rahmen einzusetzen und dann die Haltevorrichtung mit den elektrochemischen Zellen zu bestücken. In einem nächsten Schritt wird dann der Rahmen mit der darin aufgenommenen Haltevorrichtung mit den elektrochemischen Zellen in ein Grundgerüst eingebracht, das ebenfalls Teil der Tragstruktur ist.

Für eine einfache Montage weist das Grundgerüst dabei vorzugsweise Schienen auf, auf die der mindestens eine Rahmen aufgeschoben wird. Durch die Verwendung von Schienen wird die Montage des elektrochemischen Energiespeichers weiter erleichtert.

Als Schienen am Grundgerüst der Tragstruktur können zum Beispiel herkömmliche U-Profile oder L-Profile verwendet werden. Hierbei ist lediglich darauf zu achten, dass die Schienen parallel zueinander verlaufen, damit die Rahmen beim Aufschieben auf die Schienen nicht durch mögliche variierende Abstände entweder verklemmen oder zwischen den Schienen hindurchfallen.

Die pro Rahmen vorgesehene Anzahl an elektrochemischen Zellen ist abhängig von der Größe der eingesetzten elektrochemischen Zellen. Besonders bevorzugt sind die elektrochemischen Zellen, die in dem elektrochemischen Energiespeicher eingesetzt wird, Natrium-Schwefel-Zellen. Solche Natrium-Schwefel-Zellen sind üblicherweise zylindrisch und haben einen Durchmesser im Bereich von 6 bis 20 cm und eine Länge im Bereich von 50 bis 200 cm. Entsprechende Natrium-Schwefel-Zellen sind dem Fachmann bekannt und zum Beispiel in der WO-A 2017/102697 beschrieben.

Die Haltevorrichtung, an der die elektrochemischen Zellen aufgehängt sind, ist eine Platte, in der Ausnehmungen ausgebildet sind, in die die elektrochemischen Zellen gehängt sind. Der Einsatz einer Platte als Haltevorrichtung mit Ausnehmungen, in die die elektrochemischen Zellen gehängt sind, erlaubt eine gleichmäßige Durchströmung des Gehäuses, in dem die Tragstruktur aufgenommen ist, mit dem Temperiermedium. Das Temperiermedium wird hierzu oberhalb der Platten zugeführt, wobei der Raum im Gehäuse oberhalb der Platten als Verteiler wirkt. Durch die Ausnehmungen in den Platten strömt dann das Temperiermedium gleichmäßig in den Bereich, in dem die elektrochemischen Zellen aufgehängt sind. Das Temperiermedium strömt hierdurch gleichmäßig über die gesamte Querschnittsfläche des elektrochemischen Energiespeichers parallel zu den hängenden elektrochemischen Zellen von oben nach unten. Um eine gleichmäßige Strömung über die gesamte Länge der Zellen von oben nach unten zu erhalten, ist es weiterhin möglich, unterhalb der Zellen eine weitere Platte mit Öffnungen vorzusehen, unterhalb der sich das Temperiermedium sammelt und dann aus dem Gehäuse entnommen wird. Bei einer ausreichend dichten Packung der elektrochemischen Zellen, bei der sich die elektrochemischen Zellen nahezu berühren, ist es auch möglich, den Raum unterhalb der Zellen als Sammler zu nutzen, da das Temperiermedium im Wesentlichen zwischen den Zellen von oben nach unten durch die aufgrund der zylindrischen Form der Zellen gebildeten Kanäle strömen wird.

Um die elektrochemischen Zellen in der Haltevorrichtung stabil aufzuhängen und insbesondere zu verhindern, dass diese bei einer Bewegung der Haltevorrichtung, zum Beispiel beim Einschieben in das Grundgerüst oder auch bei einer Bewegung des Gehäuses sich bewegen und die Gefahr besteht, dass hierdurch elektrochemische Zellen aus der Halterung fallen, sind die Haltevorrichtungen so zu gestalten, dass ein Herausfallen der Zellen verhindert wird. Dies kann beispielsweise dadurch erreicht werden, indem jede Haltevorrichtung vorzugsweise jeweils eine Öffnung und einen an die Öffnung anschließenden Schlitz sowie eine Lasche, die einen Winkel zur Oberfläche der Platte im Bereich von mindestens 45°, bevorzugt im Bereich von 90 bis 180° einschließt, wobei die Lasche auf der zum Schlitz weisenden Seite der Öffnung angeordnet ist. In diesem Fall wird ein Träger an der elektrochemischen Zelle zur Montage durch die Öffnung über die Lasche geführt und ragt in montiertem Zustand hinter der Lasche durch den Schlitz nach unten. Die Lasche verhindert dann, dass die Aufhängung der elektrochemischen Zelle verrutschen kann. Für eine Montage in einer entsprechenden Haltevorrichtung weist die Aufhängung der elektrochemischen Zelle dabei eine an ihrem der elektrochemischen Zelle abgewandten Ecke um mindestens 90° gebogene Lasche auf. Die Aufhängung wird dann durch den Schlitz geführt und die Lasche liegt auf der als Haltevorrichtung eingesetzten Platte auf. Hierzu ist die Lasche besonders bevorzugt um 90° gebogen.

Um in der Platte die Ausnehmungen mit einer Öffnung und einem an die Öffnung anschließenden Schlitz sowie einer Lasche, die einen Winkel zur Oberfläche der Platte einschließt herzustellen, ist es bevorzugt, an den jeweiligen Positionen, an denen die elektrochemischen Zellen aufgehängt werden sollen, einen U-förmigen Schlitz in die Platte einzubringen, wobei ein Schenkel des U-förmigen Schlitzes doppelt so lang ist wie der andere. Die so erzeugte Lasche zwischen den beiden Schenkeln des U-förmigen Schlitzes wird dann an einer Biegekante, die parallel zur Basis des U-förmigen Schlitzes verläuft, nach oben gebogen. Alternativ ist es selbstverständlich auch möglich, die gesamte Öffnung auszuschneiden und anschließend eine Lasche anzuschweißen. Bevorzugt ist jedoch einen U-förmigen Schlitz auszubilden und die Lasche nach oben zu biegen.

Um eine Vormontage außerhalb des Gehäuses zu ermöglichen, ist es notwendig, die Rahmen und die Haltevorrichtung in einer Größe zu gestalten, die noch handhabbar ist. Vorzugsweise werden die einzelnen elektrochemischen Zellen in parallelen Reihen in der Haltervorrichtung aufgehängt. Bei Natrium-Schwefel-Zellen als elektrochemischen Zellen wird jeder Rahmen vorzugsweise mit 6 bis 60 Zellen bestückt. Diese werden vorzugsweise in 1 bis 5 Reihen, insbesondere in 1 bis 2 Reihen aufgehängt, wobei in jeder Reihe 5 bis 20 elektrochemische Zellen und insbesondere 8 bis 12 elektrochemische Zellen aufgehängt werden. Der Vorteil von nur 1 oder 2 Reihen je Rahmen ist, dass nach Entnahme eines Rahmens jede Zelle direkt zugänglich ist. Die Anzahl der elektrochemischen Zellen je Reihe erlaubt noch eine gute Handhabbarkeit der einzelnen Rahmen. Durch die Anzahl der Zellen je Reihe im Bereich von 5 bis 20 und bevorzugt von 8 bis 12 wird weiterhin ein Durchhängen der Haltevorrichtung verhindert.

Wenn als Haltevorrichtung eine Platte mit Öffnungen eingesetzt wird, wird die Dicke der Platte so gewählt, dass entsprechend der Anzahl der in der Platte aufgehängten Elektroden eine stabile Halterung möglich ist, das heißt eine Halterung der Zellen ohne dass die Platte durchhängt. Bei Verwendung von Natrium-Schwefel-Zellen und 1 bis 5 Reihen je Zelle mit jeweils 5 bis 20 elektrochemischen Zellen liegt die Dicke der als Haltevorrichtung eingesetzten Platte vorzugsweise im Bereich von 2 bis 10 mm.

Alternativ zu den Platten mit Öffnungen als Haltevorrichtung ist es auch möglich, Träger einzusetzen, an die die einzelnen elektrochemischen Zellen gehängt werden. Als Träger eignen sich hierzu zum Beispiel Doppel-U-Träger, T-Träger, L-Träger oder auch Hohlprofile mit einer beliebigen Querschnittsform. Um zu verhindern, dass die elektrochemischen Zellen auf den Trägern verrutschen oder von diesen abrutschen können, weisen die Aufhängungen der elektrochemischen Zellen jeweils einen Haken auf, der vorzugsweise an die Geometrie des Trägers angepasst ist. Zusätzlich ist es vorteilhaft, die Träger mit Stoppern zu versehen, die jeweils beidseitig der Aufhängung der elektrochemischen Zelle angeordnet sind, so dass ein seitliches Verrutschen der elektrochemischen Zellen durch die Stopper blockiert wird. Die Stopper können dabei entweder formschlüssig, beispielsweise durch Verschweißen, Löten oder Kleben, oder auch kraftschlüssig, beispielsweise durch Verschrauben, mit dem Träger verbunden sein.

Bevorzugt ist es jedoch, als Haltevorrichtung eine Platte mit Öffnungen einzusetzen.

Um zu verhindern, dass die einzelnen elektrochemischen Zellen bei der Montage oder bei einem Transport des elektrochemischen Energiespeichers aneinander schlagen, weisen die elektrochemischen Zellen vorzugsweise jeweils einen Abstandshalter an ihrem unteren Ende auf. Als Abstandshalter können zum Beispiel Ringe eingesetzt werden, die die elektrochemischen Zellen an ihrem unteren Ende umschließen. Die Ringe werden dabei vorzugsweise aus einem temperaturbeständigen, elektrisch nicht leitenden Material, beispielsweise einem mineralischen Fasermaterial gefertigt. Alternativ ist es auch möglich, als Abstandshalter eine Platte mit Ausnehmungen vorzusehen, durch die die elektrochemischen Zellen geführt werden. Mit einer solchen Platte würden die einzelnen elektrochemischen Zellen an ihrer Position fixiert und können sich nicht weiter bewegen. Um einen einfachen Austausch einzelner elektrochemischer Zellen zu ermöglichen, ist es jedoch bevorzugt, wenn jede Zelle mit einem separaten Abstandshalter versehen ist.

Alternativ zu einem die elektrochemische Zelle umschließenden Ring aus einem temperaturbeständigen, elektrisch nicht leitendem Material wäre es auch möglich, als Abstandshalter Laschen vorzusehen, die direkt an der elektrochemischen Zelle befestigt sind und jede Lasche vorzugsweise mit einem isolierenden Material zu überziehen, um zu verhindern, dass durch die Abstandshalter benachbarte Zellen beschädigt werden können.

Um die elektrochemischen Zellen temperieren zu können, das heißt je nach Bedarf zu heizen oder zu kühlen, weist das Gehäuse einen Zulauf und einen Ablauf für das Temperiermedium auf. Der Zulauf für das Temperiermedium befindet sich dabei oberhalb der elektrochemischen Zellen und der Ablauf unterhalb der elektrochemischen Zellen. Die zur Aufhängung der elektrochemischen Zellen eingesetzten Platten wirken als Verteiler für das Temperiermedium, so dass alle elektrochemischen Zellen innerhalb des Gehäuses gleichmäßig mit dem Temperiermedium umströmt werden. Der Zulauf für das Temperiermedium befindet sich dabei oberhalb der Platten. Um zu verhindern, dass das Temperiermedium nach dem Durchströmen der als Verteiler dienenden Platten direkt zum Ablauf für das Temperiermedium strömt, sondern, dass das Temperiermedium parallel zu den elektrochemischen Zellen nach unten das Gehäuse durchströmt, ist es möglich, beispielsweise unterhalb der elektrochemischen Zellen eine Platte mit Ausnehmungen darin einzusetzen und den Ablauf unterhalb dieser Platte. Alternativ ist es auch möglich, die Abstandshalter der elektrochemischen Zellen so zu gestalten, dass diese einzelne Öffnungen zwischen den elektrochemischen Zellen freilassen, so dass sich unterhalb der Abstandshalter ein Sammler bildet, durch den dann das Temperiermedium entnommen werden kann.

Um eine Gleichverteilung der Gasströmung über die elektrochemischen Zellen zu erzielen, werden die Öffnungen vorzugsweise hinreichend klein gewählt, um einen Druckverlust zu erzeugen, der signifikant über den Druckdifferenzen im Verteilerraum oberhalb der Platte mit Öffnungen liegt. Alternativ ist es für eine gleichmäßige Gasströmung auch möglich, über die Modullänge unterschiedliche Größen für die Öffnungen vorzusehen. Bevorzugt ist es jedoch, die Öffnungen so klein zu wählen, dass ein Druckverlust erzeugt wird, der signifikant oberhalb der Druckdifferenzen im Verteilerraum liegt.

Wenn es nicht möglich ist, eine gleichmäßige Gasströmung durch die Haltevorrichtung für die elektrochemischen Zellen zu erzeugen, zum Beispiel, wenn anstelle einer Platte mit Öffnungen Träger eingesetzt werden oder wenn die Öffnungen so groß ausgeführt werden müssen, dass der Druckverlust über die Öffnungen zu klein ist, um eine gleichmäßige Strömung zu erzeugen, ist es auch möglich, zusätzlich ober halb er Haltevorrichtung für die elektrochemischen Zellen einen Gasverteiler vorzusehen. Hierzu kann zum Beispiel eine Platte mit Öffnungen oder auch eine Platte mit Ventilen eingesetzt werden. Bevorzugt als Gasverteiler ist eine Platte mit Öffnungen, durch die eine gleichmäßige Gasströmung über die elektrochemischen Zellen erzeugt wird. Bei Einsatz eines zusätzlichen Gasverteilers ist es alternativ auch möglich, diesen unterhalb der elektrochemischen Zellen vorzusehen und die Gasströmung von unten nach oben zu richten. Bevorzugt sind allerdings ein Gasverteiler oberhalb der elektrochemischen Zellen und eine Gasströmung von oben nach unten.

Wenn als elektrochemische Zellen Natrium-Schwefel-Zellen eingesetzt werden, ist zunächst für die Inbetriebnahme eine Beheizung erforderlich. Hierbei ist es notwendig, die Temperatur der einzelnen elektrochemischen Zellen auf eine Temperatur zu erhöhen, die oberhalb der Schmelztemperaturen der Reaktanten liegt. Sobald die Reaktanten geschmolzen sind und die elektrochemische Zelle in Betrieb genommen werden kann, wird beim Laden oder Entladen in den Zellen Wärme freigesetzt, so dass in der Regel eine Kühlung der elektrochemischen Zellen notwendig ist.

Als Temperiermedium für die elektrochemischen Zellen wird vorzugsweise ein Gas eingesetzt. Besonders bevorzugt sind Gase, die gegenüber den eingesetzten Reaktanten, das heißt Alkalimetalle insbesondere Natrium, Schwefel und dem entstehenden Alkalimetall Polysulfid inert sind. Geeignete Gase sind insbesondere Stickstoff, Kohlendioxid oder Edelgase.

Um das Gas auf die Temperatur zu erwärmen, die erforderlich ist, um den elektrochemischen Energiespeicher in Betrieb zu nehmen beziehungsweise die innerhalb der elektrochemischen Zellen während des Betriebs freigesetzte Wärme abzuführen, ist ein Kanal umfasst, mit dem der Zulauf und der Ablauf für das Temperiermedium außerhalb des Gehäuses verbunden sind, wobei im Kanal ein Wärmeübertrager und eine Fördereinrichtung für das Temperiermedium aufgenommen sind. Wenn als Temperiermedium Gase eingesetzt werden, so wird als Fördereinrichtung ein Gebläse genutzt. Dieses muss dabei so ausgestaltet sein, dass es den Temperaturen im Betrieb des elektrochemischen Energiespeichers standhält. Als Wärmeübertrager kann jeder beliebige, dem Fachmann bekannte Wärmeübertrager genutzt werden, mit dem Gase erhitzt werden können oder alternativ gekühlt werden können. Geeignete Wärmeübertrager sind zum Beispiel Plattenwärmeübertager oder Rohrbündelwärmeübertrager. Um die Wärmeübertragungsfläche zu erhöhen, können die einzelnen Rohre oder Platten des Wärmeübertragers mit zusätzlichen Rippen versehen sein. Zur Erwärmung des Gases kann neben einem Wärmeübertrager auch jede andere Heizvorrichtung, zum Beispiel ein elektrisches Heizaggregat, eingesetzt werden.

Als Wärmeträgermedium, mit dem das zur Temperierung der Zellen eingesetzte Temperiermedium gekühlt oder erwärmt wird, kann jedes beliebige, bei den entsprechenden Temperaturen stabile Temperiermedium eingesetzt werden. Hierbei eignen sich insbesondere synthetische Wärmeträgeröle oder Gase.

Ausführungsformen der Erfindung sind in den Figuren dargestellt und werden in der nachfolgenden Beschreibung näher erläutert.

Es zeigen:
- Figur 1: einen elektrochemischen Energiespeicher umfassend eine Vielzahl an elektrochemischen Zellen,
- Figur 2: einen Ausschnitt einer Tragstruktur für die elektrochemischen Zellen,
- Figur 3: eine Öffnung in einer Haltevorrichtung zur Aufnahme einer elektrochemischen Zelle,
- Figur 4: die in Figur 3 dargestellte Öffnung mit einer darin aufgenommenen Lasche zur Befestigung der elektrochemischen Zellen,
- Figur 5: einen elektrochemischen Energiespeicher mit schematisch dargestelltem Temperierkreislauf.

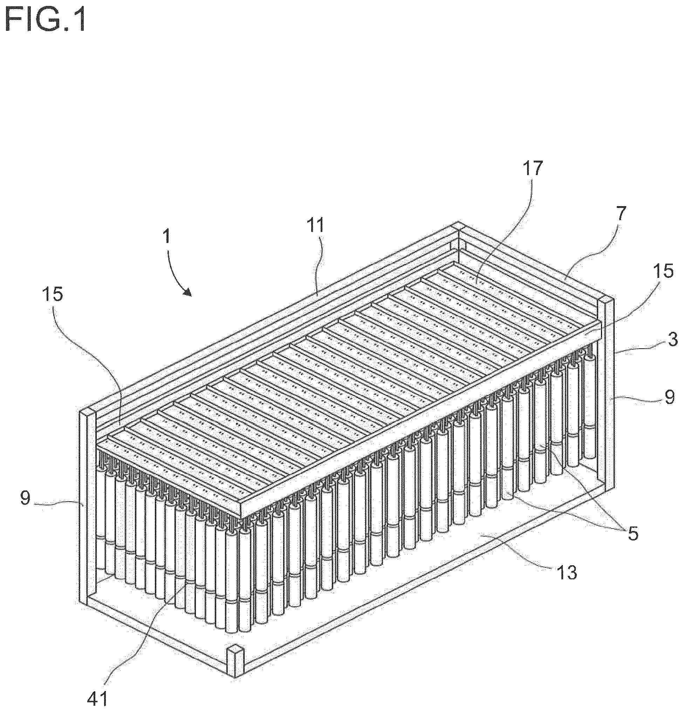

Figur 1 zeigt einen elektrochemischen Energiespeicher mit einer Vielzahl an elektrochemischen Zellen in einer dreidimensionalen Darstellung.

Ein elektrochemischer Energiespeicher 1 umfasst eine Tragstruktur 3 mit in der Tragstruktur 3 hängend befestigten elektrochemischen Zellen 5.

Die Tragstruktur 3 umfasst ein Grundgerüst 7 mit Stützen 9. Die Stützen 9 sind mit Querträgern 11 verbunden. Zusätzlich umfasst die Tragstruktur 3 der hier dargestellten Ausführungsform eine Bodenplatte 13. Alternativ zur Bodenplatte 13 ist es jedoch auch möglich, beispielsweise Querstreben vorzusehen.

Zur besseren Übersichtlichkeit ist in Figur 1 die vordere rechte Stütze abgeschnitten dargestellt. Für ein statisch stabiles Grundgerüst 7 sind alle Stützen 9 an den Ecken des Grundgerüstes 7 vorzugsweise gleich ausgeführt. Die einzelnen Stützen 9 können zum Beispiel, wie hier dargestellt, als Vierkantrohre ausgeführt sein. Alternativ ist es auch möglich, die Stützen 9 massiv zu fertigen oder in Form von L-, T- oder Doppel-T-Profilen auszuführen. Auch ist es möglich, Hohlprofile mit jedem beliebigen anderen Querschnitt, beispielsweise einem runden Querschnitt einzusetzen. Bevorzugt ist es jedoch, die Stützen 9 als Vierkanthohlprofile auszuführen.

Die Querträger 11 können ebenso wie die Stützen 9 beliebige Formen aufweisen, beispielsweise Hohlprofile mit einem beliebigen Querschnitt wie Rundprofile oder Vierkantprofile, wobei auch hier Vierkanthohlprofile bevorzugt sind. Neben den genannten Hohlprofilen ist es auch hier möglich, für die Querträger 11 L-, T-, U- oder Doppel-T-Profile zu verwenden.

Zur Aufnahme der elektrochemischen Zellen sind am Grundgerüst 7 zusätzlich Schienen 15 vorgesehen. Auf die Schienen 15 werden Haltevorrichtungen 17 für die elektrochemischen Zellen 5 aufgeschoben. Die Schienen 15 sind dabei vorzugsweise L-Profile oder U-Profile.

In der hier dargestellten Ausführungsform sind die Schienen entlang der langen Seiten des Grundgerüstes 7 angebracht. Dies hat den Vorteil, dass die Haltevorrichtung 17 kürzer gehalten werden kann als wenn diese quer über die lange Seite des Grundgerüstes 7 eingeschoben wird, so dass hier ein Durchhängen der Haltevorrichtung 17 reduziert oder vorteilhafterweise verhindert wird.

Wenn es notwendig ist, die Haltevorrichtung 17 über die lange Seite des Grundgerüstes 7 einzuschieben, ist es bevorzugt, die lange Seite mit zusätzlichen Stützen 9 zu unterteilen, so dass mehrere Haltevorrichtungen 17 nebeneinander in das Grundgerüst 7 eingeschoben werden. Abhängig von der Länge des Grundgerüstes 7 ist es so zum Beispiel möglich, zwei, drei oder mehr Haltevorrichtungen 17 nebeneinander in das Grundgerüst einzuschieben.

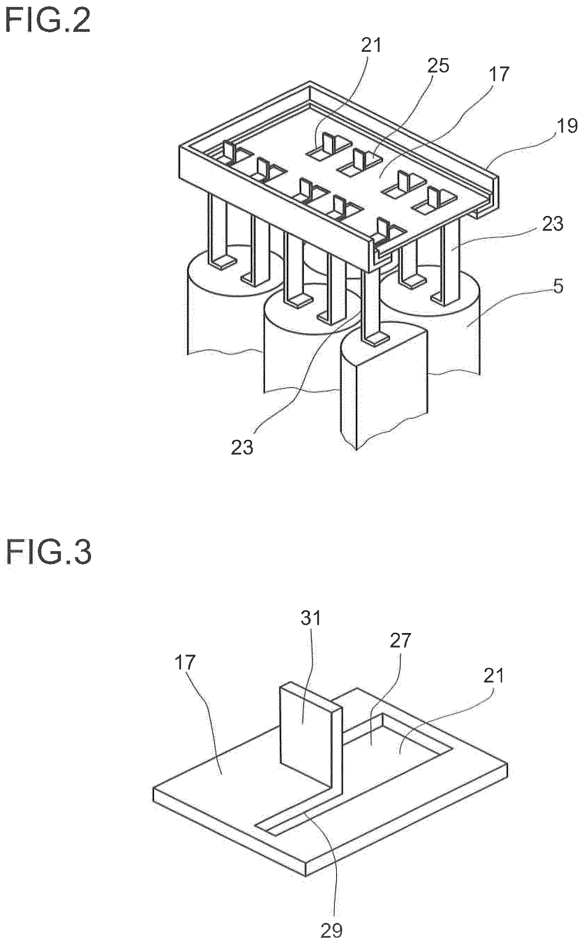

Ein Ausschnitt einer Tragstruktur für die elektrochemischen Zellen ist in Figur 2 dargestellt.

Neben der Haltevorrichtung 17 umfasst die Tragstruktur zusätzlich vorzugsweise einen Rahmen 19, auf dem die Haltevorrichtung 17 aufliegt. Die Haltevorrichtung 17 ist, wie hier dargestellt, eine Platte mit Ausnehmungen 21.

Um ein einfaches Einlegen der als Platte ausgeführten Haltevorrichtung 17 in den Rahmen 19 zu ermöglichen, ist der Rahmen vorzugsweise, wie hier dargestellt, aus L-Profilen aufgebaut.

Die elektrochemischen Zellen 5 weisen in der hier dargestellten Ausführungsform jeweils 2 Aufhängungen 23 auf. Die Aufhängungen 23 sind durch die Ausnehmungen 21 geführt und liegen mit einer Lasche 25 auf der als Platte ausgeführten Haltevorrichtung 17 auf. Durch die Verwendung von zwei Aufhängungen 23 wird ein stabileres Aufhängen der einzelnen elektrochemischen Zellen 5 erreicht, so dass diese hierdurch weniger schwingen können als wenn nur eine Aufhängung 23 vorgesehen ist. Selbstverständlich ist es alternativ auch möglich, nur eine Aufhängung 23 oder auch mehr als zwei Aufhängungen 23 vorzusehen.

Zur Montage des elektrochemischen Energiespeichers 1 wird dann der mit der als Platte ausgeführten Haltevorrichtung 17 und den elektrochemischen Zellen 5 bestückte Rahmen 19 auf die Schienen 15 des Grundgerüstes 7 aufgeschoben.

Eine mögliche Ausführung für eine Ausnehmung 21, in der eine Aufhängung 23 aufgenommen ist, ist in Figur 3 im Detail dargestellt.

Die in der als Platte ausgeführten Haltevorrichtung 17 ausgebildete Ausnehmung 21 weist eine Öffnung 27 und einen sich an die Öffnung 27 anschließenden Schlitz 29 auf. Zusätzlich ist an dem dem Schlitz 29 zuweisenden Ende der Öffnung 27 eine Lasche 31 angeordnet, wobei die Lasche 31 vorzugsweise einen Winkel zur Oberfläche der als Platte ausgeführten Haltevorrichtung 17 im Bereich von 45 bis 180° und besonders bevorzugt von 90°, einschließt. Bei eingehängter elektrochemischer Zelle wirkt die Lasche 31 als Anschlag, mit dem verhindert wird, dass die elektrochemische Zelle aus der Haltevorrichtung rutschen kann.

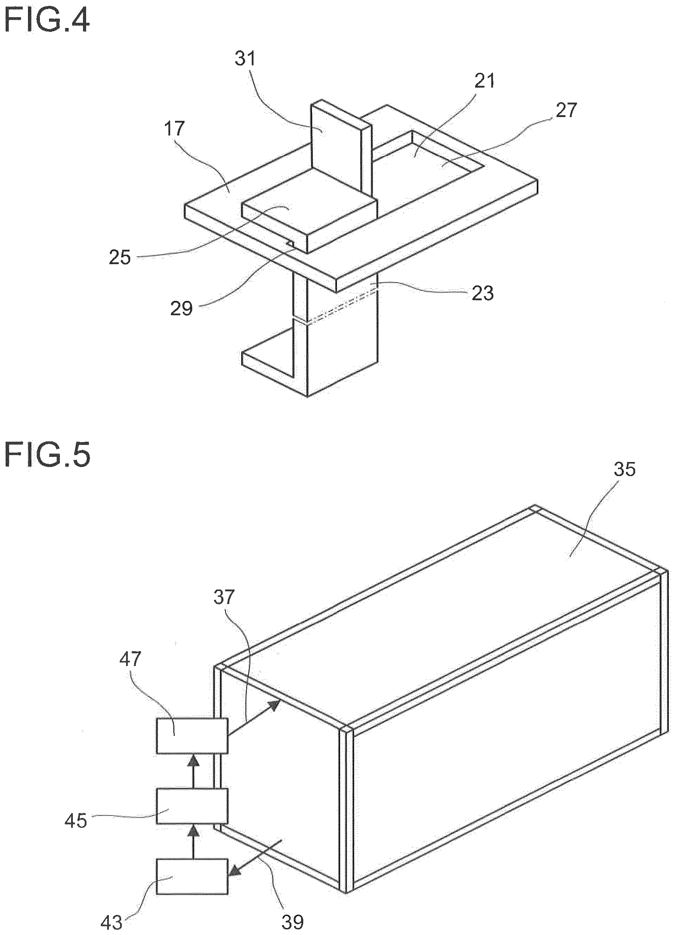

Figur 4 zeigt die in Figur 3 dargestellte Ausnehmung 21 mit einer darin aufgenommenen Aufhängung 23. Die Aufhängung 23 weist die Lasche 25 auf, die im Wesentlichen um 90° gebogen ist und auf der als Platte ausgeführten Haltevorrichtung 17 aufliegt. Dadurch, dass die Lasche 25 der Aufhängung 23 an der nach oben gebogenen Lasche 31 anliegt, wird verhindert, dass die Aufhängung 23 in Richtung der Öffnung 27 rutschen und durch die Öffnung 27 herausfallen kann. Hierbei ist die Aufhängung 23 durch den Schlitz 29 geführt.

Neben der hier dargestellten Ausführung, bei der die Aufhängung 23 als Streifen mit rechteckigem Querschnitt gestaltet ist, ist auch jede beliebige andere Querschnittsform für die Aufhängung 23 möglich. So kann diese zum Beispiel auch als Draht mit rundem Querschnitt oder auch aus mehreren nebeneinander angeordneten Drähten, die auch mit querverlaufenden weiteren Drähten verbunden sind, gestaltet sein. Auch jede beliebige andere Gestaltung für die Aufhängung 23 ist möglich. Aufgrund der einfachen Fertigung ist jedoch eine Gestaltung als Streifen, wie sie hier dargestellt ist, bevorzugt.

Zur Herstellung der Ausnehmung 21 ist es möglich, diese komplett auszuschneiden und anschließend die Lasche 31 am Ende der Öffnung 27, die zum Schlitz 29 hinweist, anzubringen, wobei die Lasche 31 in diesem Fall zum Beispiel angeschweißt, angelötet, angeklebt oder auch angeschraubt oder angenietet werden kann. Bevorzugt ist es jedoch, einen U-förmigen Schlitz in die als Platte ausgeführte Haltevorrichtung 17 einzubringen, wobei der eine Schenkel des U-förmigen Schlitzes mindestens doppelt so lang ist wie der andere Schenkel. An einer parallel zur Basis des U-förmigen Schlitzes verlaufenden Biegekante am Ende des kürzeren Schenkels wird dann die Lasche 31 nach oben gebogen. Auf diese Weise wird vermieden, dass an jeder Ausnehmung 21 eine eigene Lasche 31 angebracht werden muss.

Sollten die einzelnen Ausnehmungen 27 aus der als Platte ausgeführten Haltevorrichtung 17 ausgestanzt werden, ist es jedoch auch möglich, anstelle der hier dargestellten Lasche 31 einen beliebigen anderen Stopper vorzusehen, mit dem verhindert wird, dass die Aufhängung 23 aus dem Schlitz 29 in die Öffnung 27 rutscht und so von der Haltevorrichtung abrutschen kann. Wenn ein solcher von einer Lasche 31 verschiedener Stopper angebracht wird, so kann dieser, wie vorstehend bereits beschrieben, zum Beispiel durch Schweißen, Kleben, Löten, Schrauben oder Nieten mit der als Platte ausgeführten Haltevorrichtung 17 verbunden werden.

Da unabhängig von der Art der elektrochemischen Zellen üblicherweise beim Laden und beim Entladen Wärme frei wird, ist eine Temperierung erforderlich, um eine Überhitzung der einzelnen elektrochemischen Zellen zu verhindern. Zusätzlich ist es notwendig, den elektrochemischen Energiespeicher bei Einsatz von Alkalimetall-Schwefel-Zellen vor Inbetriebnahme auf Betriebstemperatur zu bringen, das heißt eine Temperatur, die oberhalb der Schmelztemperaturen von Natrium und Schwefel liegt. Hierzu wird eine Temperierung des elektrochemischen Energiespeichers benötigt.

Eine solche Temperierung erfolgt üblicherweise über einen Temperierkreislauf, wie er schematisch in Figur 5 dargestellt ist.

Um die elektrochemischen Zellen des elektrochemischen Energiespeichers temperieren zu können, weist der elektrochemische Energiespeicher ein Gehäuse 35 auf. Das Gehäuse 35 umschließt dabei das Grundgerüst 7 mit den darin aufgehängten elektrochemischen Zellen 5. Um die Energieeffizienz des Energiespeichers zu erhöhen, ist es bevorzugt, wenn das Gehäuse 35 thermisch isoliert ausgeführt ist. Die thermische Isolierung kann dabei an der Innenseite der einzelnen Gehäusewandungen oder an der Außenseite angebracht sein. Alternativ ist es auch möglich, das Gehäuse 35 aus einem thermisch isolierenden Material herzustellen. Das Gehäuse 35 kann zum Beispiel aus Blechen, insbesondere Stahlblechen hergestellt sein, die an der Innenseite oder an der Außenseite thermisch isoliert sind. Für die thermische Isolierung kann dabei jedes beliebige, dem Fachmann bekannte Isoliermaterial eingesetzt werden. Alternativ ist es auch möglich, das Gehäuse aus einem mineralischen Material, beispielsweise als Mauerwerk herzustellen. Vorteil des Gehäuses 35 aus Stahlblechen ist jedoch, dass in diesem Fall ein transportabler elektrischer Energiespeicher bereitgestellt werden kann, wohingegen ein elektrochemischer Energiespeicher an einem festen Standort auch mit einem gemauerten Gehäuse 35 umschlossen werden kann.

Das Gehäuse 35 weist einen Zulauf 37 und einen Ablauf 39 für ein Temperiermedium auf. Um eine gleichmäßige Temperierung der einzelnen elektrochemischen Zellen zu erhalten, werden diese von oben nach unten vom Temperiermedium umströmt. Um eine gleichmäßige Umströmung aller elektrochemischen Zellen mit dem Temperiermedium zu erhalten, befindet sich der Zulauf 37 oberhalb der Haltevorrichtung 17. Die Haltevorrichtung wirkt gleichzeitig als Verteiler für das Temperiermedium. Der Raum oberhalb der Haltevorrichtungen dient als Verteiler und das Temperiermedium strömt durch die Ausnehmungen 21 an die elektrochemischen Zellen 5. Unterhalb der elektrochemischen Zellen 5 befindet sich dann der Ablauf 39. Um eine Querströmung zu verhindern, ist es weiterhin vorteilhaft, wenn unterhalb der elektrochemischen Zellen 5 eine Lochplatte vorgesehen ist, unterhalb der das Temperiermedium gesammelt wird. Alternativ ist auch eine ausreichend dichte Bestückung mit elektrochemischen Zellen 5 möglich, so dass sich benachbarte elektrochemische Zellen 5 nahezu berühren und zwischen den elektrochemischen Zellen Kanäle ausbilden, durch die das Temperiermedium von oben nach unten strömt. "Nahezu berühren" ist dabei so zu verstehen, dass der Abstand so klein wie möglich gewählt wird, aber so groß bleibt, dass sich die benachbarten elektrochemischen Zellen 5 sicher nicht berühren, um einen Kurzschluss zu vermeiden. Unterhalb der elektrochemischen Zellen sammelt sich das Temperiermedium dann und kann über den Ablauf 39 entnommen werden.

Um insbesondere bei der Montage des elektrochemischen Energiespeichers 1 oder auch beim Transport des elektrochemischen Energiespeichers 1 zu verhindern, dass die einzelnen elektrochemischen Zellen aneinander schlagen oder auch zu verhindern, dass sich die elektrochemischen Zellen im Betrieb berühren, sind diese vorzugsweise an ihrem unteren Ende mit einem Abstandshalter versehen. Als Abstandshalter lässt sich beispielsweise ein Ring 41, wie er schematisch in Figur 1 dargestellt ist, einsetzen. Der Ring 41 wird dabei vorzugsweise aus einem temperaturbeständigen, nicht leitenden Material gefertigt, wobei dieses gegenüber den im Gehäuse 35 auftretenden Temperaturen stabil muss. Alternativ zu einem Ring 41 kann als Abstandshalter jedoch auch vorgesehen sein, an den einzelnen elektrochemischen Zellen jeweils direkt Abstandshalter anzubringen, die mit einem elastischen Material überzogen sind, um bei Berührung mit benachbarten Zellen Schäden zu vermeiden. Des Weiteren ist es auch möglich, eine Platte mit Öffnungen vorzusehen, durch die die elektrochemischen Zellen geführt sind. Hierbei sind zusätzlich weitere Öffnungen vorzusehen, durch die das Temperiermedium strömen kann, um eine Temperierung der elektrochemischen Zellen zu ermöglichen.

Das aus dem Gehäuse 35 über den Ablauf 39 entnommene Temperiermedium wird dann durch einen Wärmeübertrager 43, eine Heizvorrichtung 45 und eine Fördereinrichtung 47 geführt und anschließend über den Zulauf 37 wieder in das Gehäuse 35 eingeleitet. Der Wärmeübertrager 43, die Heizvorrichtung 45 und die Fördereinrichtung 47 sind dabei vorzugsweise in einem Kanal angeordnet, wobei dieser als Rohrleitung oder auch als Kanal mit einem beliebigen anderen Querschnitt, beispielsweise als Rechteckkanal, ausgeführt sein kann.

Der Wärmeübertrager 43 dient insbesondere zum Kühlen des Temperiermediums, wenn das Temperiermedium eingesetzt wird, um die elektrochemischen Zellen zu kühlen, wie dies beispielsweise bei Alkalimetall-Schwefel-Zellen während des Lade- und Entladevorganges notwendig ist. Hierbei gibt das Temperiermedium im Wärmeübertrager 43 Wärme an ein weiteres Temperiermedium ab, wobei hier als Temperiermedium zum Beispiel Wasser oder ein beliebiges anderes übliches Temperiermedium, beispielsweise ein Thermalöl eingesetzt werden kann.

Wenn entweder für den Betrieb der elektrochemischen Zelle oder auch zum Anfahren der elektrochemischen Zelle Wärme zugeführt werden muss, ist die Heizvorrichtung vorgesehen. In der Heizvorrichtung wird das Temperiermedium erwärmt. Die Erwärmung kann dabei direkt oder indirekt erfolgen, wobei eine indirekte Erwärmung beispielsweise durch Verwendung eines Temperiermediums erfolgt, das Wärme an das Temperiermedium zur Temperierung der elektrochemischen Zellen abgibt. Hierbei können jedoch nur Temperiermedien eingesetzt werden, die Temperaturen oberhalb der Temperatur, auf die das Temperiermedium zu erwärmen ist, stabil sind. Geeignete Heizmedien wären zum Beispiel Salzschmelzen. Bevorzugt ist es daher, eine Heizeinrichtung einzusetzen, in der das Temperiermedium elektrisch oder induktiv erwärmt wird oder auch durch Verbrennung eines Brennstoffs.

Alternativ zu der hier dargestellten Ausführungsform mit Wärmeübertrager 43 zur Kühlung und einer separaten Heizvorrichtung 45 ist es auch möglich, nur einen Wärmeübertrager einzusetzen, der sowohl zur Beheizung als auch zur Kühlung eingesetzt wird. Hierzu kann entweder zur Beheizung und zur Kühlung die Temperatur des Temperiermediums variiert werden oder es wird ein Kombinationsgerät eingesetzt, das mit einem Temperiermedium kühlt und zur Beheizung zusätzlich elektrische Heizelemente enthält mit denen das Temperiermedium zur Temperierung der elektrochemischen Zellen bei Bedarf erwärmt werden kann.

Die Fördereinrichtung 47 ist abhängig vom eingesetzten Temperiermedium. Üblicherweise wird als Temperiermedium zum Temperieren der elektrochemischen Zellen 5 ein Gas verwendet, so dass die Fördereinrichtung 47 ein Gebläse ist.

Um zu verhindern, dass bei Beschädigung einer elektrochemischen Zelle eine chemische Reaktion erfolgt, wird als Temperiermedium ein gegenüber den eingesetzten Reaktanten in den elektrochemischen Zellen inertes Gas verwendet. Bevorzugt als Temperiermedium sind Stickstoff, Kohlendioxid oder Edelgase wie Argon. Besonders bevorzugt ist Stickstoff.

Die Fördereinrichtung 47 wird so dimensioniert, dass eine für die Temperierung der elektrochemischen Zellen ausreichende Menge an Temperiermedium durch das Gehäuse 35 geführt werden kann.

### Bezugszeichenliste

- 1: Elektrochemischer Energiespeicher
- 3: Tragstruktur
- 5: elektrochemische Zelle
- 7: Grundgerüst
- 9: Stützen
- 11: Querträger
- 13: Bodenplatte
- 15: Schiene
- 17: Haltevorrichtung
- 19: Rahmen
- 21: Ausnehmung
- 23: Aufhängung
- 25: Lasche
- 27: Öffnung
- 29: Schlitz
- 31: Lasche
- 35: Gehäuse
- 37: Zulauf
- 39: Ablauf
- 41: Ring
- 43: Wärmeübertrager
- 45: Heizvorrichtung
- 47: Fördervorrichtung

## Patentansprüche

1. Elektrochemischer Energiespeicher, umfassend mindestens eine elektrochemische Zelle (5) sowie eine Tragstruktur (3), wobei die mindestens eine elektrochemische Zelle (5) hängend in der Tragstruktur (3) aufgenommen ist und die Tragstruktur (3) mit der mindestens einen darin hängend aufgenommenen elektrochemischen Zelle (5) von einem Gehäuse (35) umschlossen ist, wobei das Gehäuse (35) einen Zulauf (37) und einen Ablauf (39) für ein Temperiermedium aufweist, die so angeordnet sind, dass das Temperiermedium von oben nach unten entlang der elektrochemischen Zellen (5) strömt und der Zulauf (37) für das Temperiermedium oberhalb der Haltevorrichtung (17) angeordnet ist, wobei die Tragstruktur (3) mindestens einen Rahmen (19) mit einer Haltevorrichtung (17) umfasst, in der die elektrochemischen Zellen (5) aufgehängt sind und die Haltevorrichtung (17) eine Platte ist, in der Ausnehmungen (21) ausgebildet sind, in die die elektrochemischen Zellen (5) gehängt sind, wobei die Ausnehmungen (21) weiterhin so gestaltet sind, dass ein Temperiermedium durch die Ausnehmungen (21) gleichmäßig in den Bereich strömt, in dem die elektrochemischen Zellen (5) aufgehängt sind.

2. Elektrochemischer Energiespeicher gemäß Anspruch 1, **dadurch gekennzeichnet, dass** die Ausnehmungen (21) jeweils eine Öffnung (27) und einen an die Öffnung (27) anschließenden Schlitz (29) umfassen sowie eine Lasche (31), die einen Winkel zur Oberfläche der Platte im Bereich von 45 bis 180° einschließt, wobei die Lasche (31) auf der zum Schlitz (29) weisenden Seite der Öffnung (27) angeordnet ist.

3. Elektrochemischer Energiespeicher gemäß einem der Ansprüche 1 oder 2, **dadurch gekennzeichnet, dass** die elektrochemischen Zellen (5) jeweils eine Aufhängung (23) aufweisen, die an ihrem der elektrochemischen Zelle (5) abgewandten Ende eine um mindestens 90° gebogene Lasche (25) aufweist.

4. Elektrochemischer Energiespeicher gemäß Anspruch 2 und 3, **dadurch gekennzeichnet, dass** die Aufhängung (23) der elektrochemischen Zelle (5) durch den Schlitz (29) geführt ist und mit der um 90° gebogenen Lasche (25) auf der Platte aufliegt.

5. Elektrochemischer Energiespeicher gemäß einem der Ansprüche 1 bis 4, **dadurch gekennzeichnet, dass** die Tragstruktur (3) ein Grundgerüst (7) mit Schienen (15) aufweist, auf die der mindestens eine Rahmen (19) aufgeschoben ist.

6. Elektrochemischer Energiespeicher gemäß einem der Ansprüche 1 bis 5, **dadurch gekennzeichnet, dass** die elektrochemischen Zellen (5) jeweils einen Abstandhalter (41) an ihrem unteren Ende aufweisen, um zu verhindern, dass die einzelnen elektrochemischen Zellen (5) bei der Montage oder bei einem Transport des elektrochemischen Energiespeichers (1) aneinander schlagen.

7. Elektrochemischer Energiespeicher gemäß einem der Ansprüche 1 bis 6, **dadurch gekennzeichnet, dass** ein Kanal umfasst ist, mit dem der Zulauf (37) und der Ablauf (39) für das Temperiermedium außerhalb des Gehäuses (35) verbunden sind, wobei im Kanal ein Wärmeübertrager (43) und eine Fördereinrichtung (47) für das Temperiermedium aufgenommen sind.

8. Elektrochemischer Energiespeicher gemäß einem der Ansprüche 1 bis 7, **dadurch gekennzeichnet, dass** die elektrochemischen Zellen (5) Natrium-Schwefel-Zellen sind.

## Claims

1. An electrochemical energy store comprising at least one electrochemical cell (5) and a support structure (3), wherein the at least one electrochemical cell (5) is accommodated in a suspended manner in the support structure (3) and the support structure (3) together with the at least one electrochemical cell (5) accommodated therein in a suspended manner is enclosed by a housing (35), wherein the housing (35) has an inlet (37) and an outlet (39) for a temperature control medium, which are arranged in such a way that the temperature control medium flows from the top downward along the electrochemical cells (5) and the inlet (37) for the temperature control medium is arranged above the holding device (17), wherein the support structure (3) comprises at least one frame (19) with a holding device (17) in which the electrochemical cells (5) are suspended and the holding device (17) is a plate in which there are cutouts (21) in which the electrochemical cells (5) are suspended, wherein the cutouts (21) are further configured such that a temperature control medium flows uniformly through the cutouts (21) into the region in which the electrochemical cells (5) are suspended.

2. The electrochemical energy store according to claim 1, wherein the cutouts (21) each comprise an opening (27) and a slot (29) adjoining the opening (27), and also a bracket (31) which includes an angle to the surface of the plate in the range from 45 to 180°, with the bracket (31) being arranged on the side of the opening (27) facing the slot (29).

3. The electrochemical energy store according to either of claims 1 and 2, wherein the electrochemical cells (5) each have a suspension (23) which at its end facing away from the electrochemical cell (5) has a bracket (25) bent through at least 90°.

4. The electrochemical energy store according to claim 2 or 3, wherein the suspension (23) of the electrochemical cell (5) has been passed through the slot (29) and rests with the bracket (25) bent through 90° on the plate.

5. The electrochemical energy store according to any of claims 1 to 4, wherein the support structure (3) comprises a main framework (7) having rails (15) onto which the at least one frame (19) has been pushed.

6. The electrochemical energy store according to any of claims 1 to 5, wherein the electrochemical cells (5) each have a spacer (41) at their lower end, in order to prevent the individual electrochemical cells (5) from knocking against one another during assembly or during transport of the electrochemical energy store (1).

7. The electrochemical energy store according to any of claims 1 to 6, wherein a channel to which the inlet (37) and the outlet (39) for the temperature control medium are connected outside the housing (35) is provided, with a heat exchanger (43) and a transport device (47) for the temperature control medium being accommodated in the channel.

8. The electrochemical energy store according to any of claims 1 to 7, wherein the electrochemical cells (5) are sodium-sulfur cells.

## Revendications

1. Accumulateur **d'énergie** électrochimique comprenant au moins une cellule électrochimique (5) ainsi qu'une structure porteuse (3), l'au moins une cellule électrochimique (5) étant logée en suspension dans la structure porteuse (3) et la structure porteuse (3) pourvue de l'au moins une cellule électrochimique (5) logée en suspension dans celle-ci étant entourée **d'un** boîtier (35), le boîtier (35) possédant une arrivée (37) et un départ (39) pour un fluide de régulation de température, lesquels sont disposés de telle sorte que le fluide de régulation de température s'écoule du haut vers le bas le long des cellules électrochimiques (5) et que l'arrivée (37) pour le fluide de régulation de température est disposée au-dessus de l'arrangement de maintien (17), la structure porteuse (3) comprenant au moins un cadre (19) pourvu d'un arrangement de maintien (17) dans lequel les cellules électrochimiques (5) sont suspendues, et l'arrangement de maintien (17) étant une plaque dans laquelle sont formés des évidements (21) dans lesquels les cellules électrochimiques (5) sont suspendues, les évidements (21) étant en outre configurés de telle sorte qu'un fluide de régulation de température s'écoule uniformément à travers les évidements (21) dans la zone dans laquelle les sont suspendues cellules électrochimiques (5).

2. Accumulateur d'énergie électrochimique selon la revendication 1, **caractérisé en ce que** les évidements (21) comprennent chacun une ouverture (27) et une fente (29) qui est rattachée à l'ouverture (27), ainsi qu'une languette (31) qui forme un angle dans la plage de 45 à 180° par rapport à la surface de la plaque, la languette (31) étant disposée sur le côté de l'ouverture (27) tourné vers la fente (29).

3. Accumulateur d'énergie électrochimique selon l'une des revendications 1 ou 2, **caractérisé en ce que** les cellules électrochimiques (5) possèdent respectivement une suspension (23) qui présente, à son extrémité opposée à la cellule électrochimique (5), une languette (25) coudée d'au moins 90°.

4. Accumulateur d'énergie électrochimique selon les revendications 2 et 3, **caractérisé en ce que** la suspension (23) de la cellule électrochimique (5) passe à travers la fente (29) et repose sur la plaque avec la languette (25) coudée à 90°.

5. Accumulateur d'énergie électrochimique selon l'une des revendications 1 à 4, **caractérisé en ce que** la structure porteuse (3) possède une ossature de base (7) comprenant des rails (15) sur lesquels est emboîté au moins un cadre (19).

6. Accumulateur d'énergie électrochimique selon l'une des revendications 1 à 5, **caractérisé en ce que** les cellules électrochimiques (5) possèdent chacune une entretoise (41) au niveau leur extrémité inférieure, afin d'empêcher que les cellules électrochimiques (5) individuelles ne viennent se heurter les unes les autres lors du montage ou lors du transport de l'accumulateur d'énergie électrochimique (1).

7. Accumulateur d'énergie électrochimique selon l'une des revendications 1 à 6, **caractérisé en ce qu'**il comporte un canal qui relie l'arrivée (37) et le départ (39) du fluide de régulation de température à l'extérieur du boîtier (35), un échangeur de chaleur (43) et un dispositif de transport (47) pour le fluide de régulation de température étant logés dans le canal.

8. Accumulateur d'énergie électrochimique selon l'une des revendications 1 à 7, **caractérisé en ce que** les cellules électrochimiques (5) sont des cellules au sodium-soufre.
